# EUROPÄISCHE PATENTSCHRIFT

(11) **EP 1 776 859 B1**
(45) Veröffentlichungstag und Bekanntmachung des Hinweises auf die Patenterteilung: **11.06.2008**
(21) Anmeldenummer: 06015617.1
(22) Anmeldetag: 26.07.2006
(51) Int. Cl.: A01D 57/20, A01D 43/10

(54) **Erntemaschine**
Harvesting machine
Machine de récolte

(30) Priorität: 19.10.2005 DE 102005050157
(43) Veröffentlichungstag der Anmeldung: 25.04.2007
(73) Patentinhaber: Alois Pöttinger Maschinenfabrik GmbH, 4710 Grieskirchen (AT)
(72) Erfinder: Mörtlbauer, Josef, 4722 Peuerbach (AT)
(74) Vertreter: Thoma, Michael

(56) Entgegenhaltungen:
- EP-A1- 1 250 834
- WO-A-03/079761
- CA-A1- 2 136 499
- US-B1- 6 955 034

## Beschreibung

Die vorliegende Erfindung betrifft eine Erntemaschine mit zumindest einem Mähwerk, einem dem Mähwerk nachgeordneten Konditionierer, einem dem Konditionierer nachgeordneten Querförderer zum Ablegen des konditionierten Ernteguts in einem seitlichen Schwad sowie einer Umlenkwalze zur Umlenkung des konditionierten Ernteguts auf den Querförderer.

Mähwerken werden gelegentlich Konditionierer nachgeschaltet, um das abgemähte Erntegut aufzuschließen, so dass eine schnellere Trocknung des Ernteguts erreicht werden kann. Solche Konditionierer können ein Konditionierwalzenpaar besitzen, die gegenläufig umlaufen, so dass das Erntegut zwischen ihnen hindurchgefördert wird und dabei gequetscht und geknickt wird.

Andererseits werden bisweilen hinter Mähwerken Querförderer gefahren, um das abgemähte Erntegut nicht ausgebreitet unmittelbar hinter dem Mähwerk am Boden liegen zu lassen, sondern das Erntegut in einem Schwad seitlich abzulegen. Insbesondere bei mehreren nebeneinander oder gestaffelt hintereinander angeordneten Mähwerken kann das Erntegut hierdurch in einem gemeinsamen Schwad abgelegt werden.

Wenn solche Konditionierer und Querförderer zusammen verwendet werden, kann es zu Problemen bei der Beschickung des Querförderers kommen. Das durch die beiden Konditionierwalzen laufende Erntegut wird von diesen in einem eher trägen, komprimierten Erntegutstrom abgegeben, der seinen Weg nicht ohne weiteres auf den Querförderer findet. Die Querförderer sind oftmals höher angeordnet als die Konditionierer, so dass eine Übergabe nicht ohne weiteres möglich ist. Bisherige Lösungsansätze hierzu sind eher aufwendig, besitzen eine große Baugröße und verteuern die Anlage.

Aus der EP 1250834 A1 ist eine Erntemaschine mit einem Mähwerk, einem diesem nachgeschalteten Konditionierer sowie einem dem Konditionierer nachgeschalteten Querförderer bekannt, wobei zwischen dem Querförderer und dem Konditionierer ein Zwischenförderer in Form von drei Förderwalzen vorgesehen ist, um die Übergabe des Ernteguts vom Konditionierer auf den Querförderer sicherzustellen.

Der Erfindung liegt die Aufgabe zugrunde, eine verbesserte Erntemaschine der genannten Art zu schaffen, die Nachteile des Standes der Technik vermeidet und letzteren in vorteilhafter Weise weiterbildet. Vorzugsweise soll mit einfachen Mitteln eine verbesserte Übergabe des Ernteguts vom Konditionierer auf den Querförderer erreicht werden, die das Erntegut zusätzlich auflockert und die Baulänge der Erntemaschine kurz hält.

Erfindungsgemäß wird diese Aufgabe durch eine Erntemaschine gemäß Anspruch 1 gelöst. Bevorzugte Ausgestaltungen der Erfindung sind Gegenstand der abhängigen Ansprüche.

Es wird hierzu also vorgeschlagen, dem aus den beiden Konditionierwalzen austretenden Erntegutstrom nochmals einen zusätzlichen Impuls zu geben, der das Erntegut auf den Querförderer lenkt. Erfindungsgemäß besitzt der Konditionierer ein paar gegenläufig umlaufende, übereinander angeordnete Konditioniererwalzen, wobei die Umlenkwalze von ihrer Höhe her zwischen den beiden Konditionierwalzen in deren Abgabebereich angeordnet ist und mit einer Geschwindigkeit antreibbar ist, um das Erntegut auf den Querförderer zu werfen, wobei über der Umlenkwalze ein Auswurfleitblech angeordnet ist. Die Zusatzwalze gibt dem Erntegut zusätzlichen Schwung und lockert das Erntegut auf, so dass dieses besser auf den Querförderer gelangt und von diesem besser gefördert werden kann.

Das Erntegut rollt also nicht bloß über diese Zusatzwalze hinweg, sondern wird von ihr beschleunigt. Die Dreh- bzw. Umfangsgeschwindigkeit der zusätzlichen Umlenkwalze wird dabei zumindest so hoch gewählt, dass ein Abwurf des Ernteguts erreicht wird.

In Weiterbildung der Erfindung kann der Walzenantrieb die Umlenkwalze mit variabler Geschwindigkeit antreiben, so dass diese an das Erntegut, aber auch an die Geometrieverhältnisse zwischen Konditionierer und Querförderer angepasst werden kann, um den Abwurf so zu steuern, dass das Erntegut in der gewünschten Weise auf den Querförderer aufgegeben wird.

Grundsätzlich kann der Walzenantrieb für die zusätzliche Umlenkwalze ein separater Antrieb sein, der die genannte Umlenkwalze unabhängig von den Konditionierwalzen antreiben kann. In Weiterbildung der Erfindung jedoch besitzt der Konditionierer einen gemeinsamen Walzenantrieb für die beiden Konditionierwalzen und die zumindest eine nachgeschaltete Umlenkwalze. Hierdurch kann mit einfachen Mitteln ohne viele zusätzliche Bauteile ein Antrieb aller Konditioniererwalzen erreicht werden. Der Antrieb für die zusätzliche nachgeschaltete Umlenkwalze wird einfach von dem Antrieb für die beiden Konditionierwalzen abgeleitet.

Vorzugsweise sind die beiden Konditionierwalzen und die Umlenkwalze getrieblich miteinander gekoppelt, so dass das Verhältnis der Drehgeschwindigkeiten durch die Koppelung vorgebbar ist. Insbesondere kann die zusätzliche Umlenkwalze über einen Antriebsriemen oder eine Antriebskette mit den beiden Konditionierwalzen gekoppelt sein.

Sind die genannten beiden Konditionierwalzen übereinander angeordnet, ist die nachgeschaltete Umlenkwalze von ihrer Höhe her zwischen den beiden Konditionierwalzen angeordnet. Vorteilhafterweise ist sie dabei derart plaziert, dass der von den beiden Konditionierwalzen abgegebene Futterstrom nicht von oben her auf die nachgeschaltete Umlenkwalze fällt und von dieser lediglich noch ein wenig weitergefördert wird, sondern direkt auf die Vorderseite der Umlenkwalze, d.h. die den beiden Konditionierwalzen zugewandte Seite, trifft. Die nachgeschaltete Umlenkwalze liegt dabei sozusagen frontal in dem aus den beiden Konditionierwalzen kommenden Erntegutstrom, der von der nachgeschalteten Umlenkwalze dementsprechend zunächst nach oben gelenkt und entsprechend der umlaufenden Bewegung nach hinten bzw. schräg nach hinten oben ausgeworfen wird.

Um den von der Umlenkwalze ausgeworfenen Erntegutstrom besser zu kanalisieren und an die gewünschte Stelle zu lenken, kann in Weiterbildung der Erfindung oberhalb der Umlenkwalze ein Auswurfleitblech angeordnet sein, welches sich vorzugsweise geneigt nach hinten oben erstreckt und nach hinten ein ausreichendes Stück weit über die Umlenkwalze übersteht. Mit Hilfe eines solchen Auswurfleitblechs wird insbesondere verhindert, dass das Erntegut von der Umlenkwalze zu stark nach oben und damit nicht mehr präzise auf den Querförderer geworfen wird.

Entsprechend ihrer unterschiedlichen Aufgaben können die Walzen des Konditionierers verschieden ausgebildet sein. Insbesondere kann die nachgeschaltete Umlenkwalze eine von den beiden Konditionierwalzen abweichende Oberflächengeometrie aufweisen. Die Oberflächengeometrie der Umlenkwalze kann dabei grundsätzlich verschieden ausgebildet sein, wobei vorzugsweise Mitnehmer in Form von Vorsprüngen oder dergleichen auf der Mantelfläche der Umlenkwalze vorgesehen sind, um das Erntegut besser mitzunehmen. Nach einer vorteilhaften Ausführung der Erfindung kann die Umlenkwalze vorspringende Längsrippen aufweisen.

Die beiden gegenläufig angetriebenen Konditionierwalzen vor der Umlenkwalze bilden vorteilhafterweise Quetschwalzen, wobei sie eine von der Kreiszylinderform abweichende Oberflächenkontur besitzen können, die beim gegenläufigen Umlaufen der Konditionierwalzen ineinander greifen. Hierdurch kann ein stärkeres Aufschließen des Ernteguts erreicht werden.

In Weiterbildung der Erfindung sind das Mähwerk und der Konditionierer zu einer Baugruppe zusammengefasst, die gemeinsam an einem Maschinenrahmen der Erntemaschine aufgehängt ist.

Die Erfindung wird nachfolgend anhand eines bevorzugten Ausführungsbeispiels und zugehöriger Zeichnungen näher erläutert. In den Zeichnungen zeigen:
- Fig. 1:: eine Draufsicht auf eine an einen Schlepper angebaute Mähmaschine mit mehreren in verschiedenen Spuren angeordneten Mähwerken mit nachgeschalteten Konditionierern und Querförderern nach einer bevorzugten Ausführung der Erfindung,
- Fig. 2:: eine schematische, perspektivische Ansicht des Konditionierers der Erntemaschine aus Fig. 1, die die Anordnung der beiden Konditionierwalzen und der nachgeschalteten Umlenkwalze zeigt, und
- Fig. 3:: eine schematische Seitenansicht des Konditionierers aus Fig. 2.

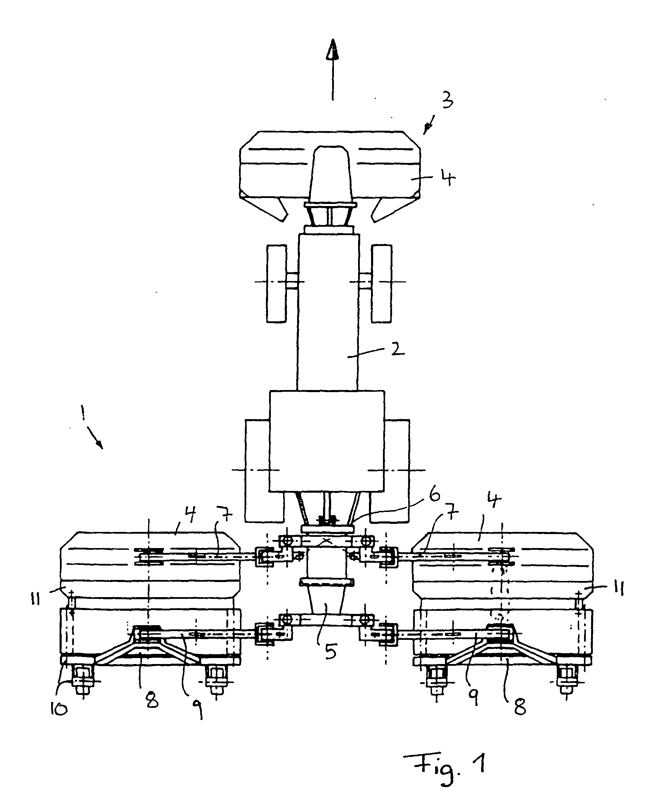

Fig. 1 zeigt eine Erntemaschine 1 in Form einer an einen Schlepper 2 anbaubaren Mähmaschine 3, die mehrere, in verschiedenen Spuren angeordnete Mähwerke 4 aufweist. In der gezeichneten Ausführung sind konkret ein frontangebautes Mähwerk sowie zwei heckangebaute, seitlich auskragende Mähwerke vorgesehen. Es versteht sich jedoch, dass grundsätzlich auch andere Anordnungen möglich sind.

Die Mähwerke 4 können dabei in an sich bekannter Weise als Scheiben- oder Trommelmähwerke ausgebildet sein. Sie sind an einem Maschinenrahmen 5 gelagert, der über einen Anbaubock 6 an dem Schlepper 2 anbaubar ist. Vorteilhafterweise sind die beiden heckangebauten Mähwerke 4 an Schwenkarmen 7 gelagert, die um liegende, in Fahrtrichtung weisende Schwenkachsen zum Zwecke des Transports nach oben schwenkbar sind. Der Antrieb der Mähwerke 4 erfolgt vorteilhafterweise über eine Zapfwelle vom Schlepper 2 her, kann jedoch auch in anderer Weise erfolgen.

Den heckangebauten Mähwerken 4 ist jeweils ein Querförderer 8 nachgeschaltet, der jeweils im Wesentlichen in der Spur des zugehörigen Mähwerks 4 fährt. Die Querförderer 8 sind ebenfalls an dem Maschinenrahmen 5 angelenkt, und zwar vorteilhafterweise über separate Schwenkarme 9, die ebenfalls um liegende, in Fahrtrichtung weisende Achsen zum Zwecke des Transports nach oben geschwenkt werden können. An den äußeren Enden der Schwenkarme 9 sind die Querförderer 8 um liegende, in Fahrtrichtung weisende Achsen pendelnd aufgehängt.

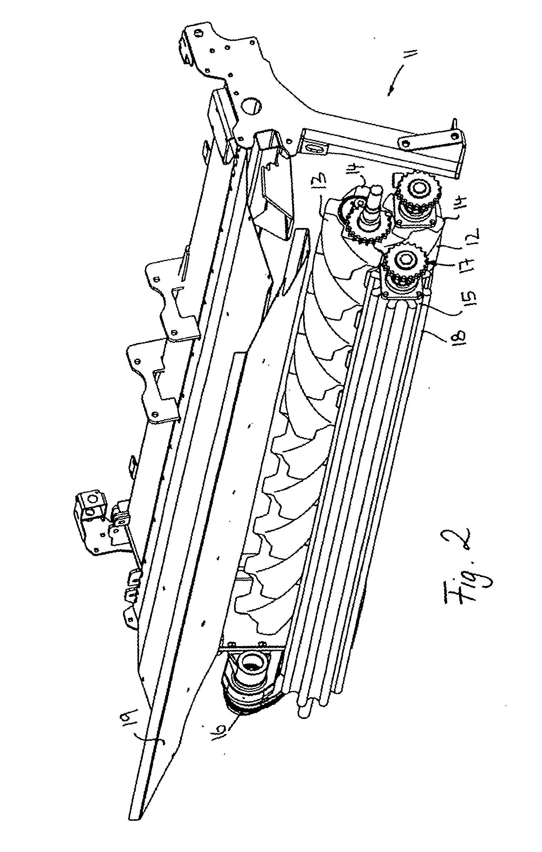

Jeder der Querförderer 8 umfasst einen Endlosumlaufförderer 10, der grundsätzlich verschieden ausgebildet sein kann. Beispielsweise kann der Endlosumlaufförderer 10 ein Ketten-, Band- oder Riemenförderer sein. Vorteilhafterweise ist er als Querförderband ausgebildet, wie dies Fig. 2 zeigt. Das Querförderband läuft dabei endlos um zwei voneinander beabstandete, in Fahrtrichtung weisende Umlenkrollen bzw. -walzen um. Das Querförderband kann dabei im Wesentlichen etwa liegend, insbesondere horizontal angeordnet sein.

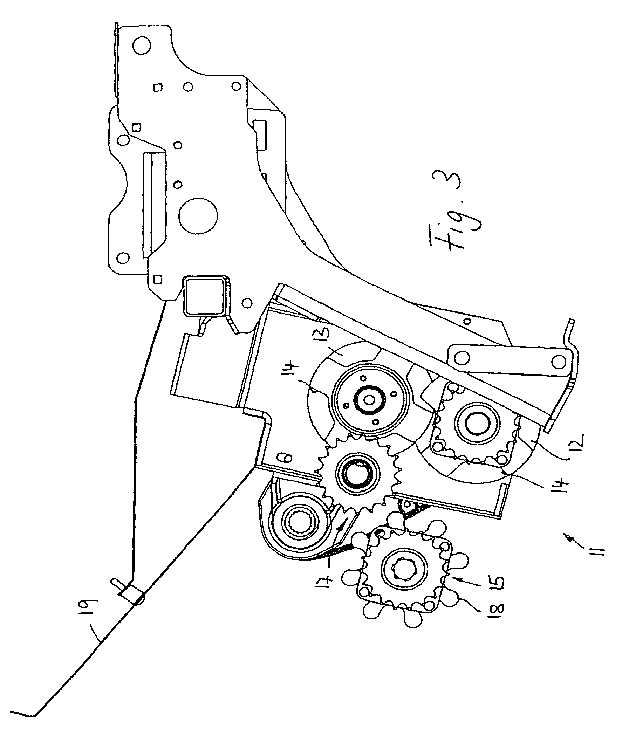

Zwischen den Querförderern 8 und den Mähwerken 4 ist dabei jeweils ein Konditionierer 11 vorgesehen, wie ihn die Figuren 2 und 3 zeigen. Der Konditionierer 11 ist dabei vorteilhafterweise mit dem jeweils zugehörigen Mähwerk 4 zu einer Baugruppe zusammengefasst, so dass der Konditionierer zusammen mit dem jeweiligen Mähwerk 4 nach oben geschwenkt werden kann bzw. unabhängig hiervon der Querförderer 8 nach oben geschwenkt werden kann, beispielsweise um das gemähte und konditionierte Erntegut nicht in einem Schwad, sondern gestreut am Boden abzulegen.

Alternativ könnte auch vorgesehen sein, den Konditionierer 11 mit dem Querförderer 8 zu einer Baugruppe zusammenzufassen, so dass er zusammen mit dem Querförderer 8 über die Schwenkarme 9 weggeschwenkt werden könnte.

Wie Figur 2 zeigt, umfasst der Konditionierer 11 zwei übereinander angeordnete Konditionierwalzen 12 und 13, die ein Paar Quetschwalzen bilden und gegenläufig angetrieben werden, so dass das Erntegut zwischen ihnen hindurchgefördert wird. Die beiden Konditionierwalzen 12 und 13 besitzen dabei eine von der Zylinderform abweichende Oberflächengeometrie, die beim Umlaufen der Konditionierwalzen 12 und 13 ineinander greifen. In der in Figur 2 gezeichneten Ausführung besitzen die Konditionierwalzen 12 und 13 schraubenförmige Erhebungen bzw. schräg verlaufende Rippen 14, die ineinander greifen, wenn die beiden Konditionierwalzen 12 und 13 gegenläufig angetrieben werden (vgl. Figur 3).

Im Abgabebereich der beiden Konditionierwalzen 12 und 13 umfasst der Konditionierer 11 eine zusätzliche Umlenkwalze 15, die sich wie die beiden Konditionierwalzen 12 und 13 in der gezeichneten Ausführung über die gesamte Breite des Konditionierers 11 erstreckt. Die drei Walzen 12, 13 und 15 sind vorteilhafterweise um zueinander parallele Achsen angeordnet.

Wie Figur 3 zeigt, ist die Umlenkwalze 15 in der gezeichneten Ausführung von ihrer Höhe her etwa mittig zwischen den beiden Konditionierwalzen 12 und 13 angeordnet und von diesen ein Stück weit beabstandet. Die Umlenkwalze 15 ist dabei zumindest etwa um ihren Radius von den beiden Konditionierwalzen 12 und 13 beabstandet.

Über einen Walzenantrieb 16 werden die beiden Konditionierwalzen 12 und 13 mit gleicher Drehgeschwindigkeit angetrieben. Die Umlenkwalze 15 ist ebenfalls angetrieben, wobei hierzu der Antrieb der beiden Konditionierwalzen 12 und 13 abgegriffen wird. Wie Figur 2 zeigt, kann die Umlenkwalze 15 über einen Kettentrieb 17 mit den beiden Konditionierwalzen getrieblich gekoppelt sein. Die Koppelung kann dabei verschiedene Drehgeschwindigkeiten der Umlenkwalze 15 relativ zu den Konditionierwalzen vorsehen. In der gezeichneten Ausführung kann die Koppelung bzw. der Kettentrieb 17 derart bemessen sein, dass alle drei Walzen 12, 13 und 15 mit gleicher Drehgeschwindigkeit umlaufen.

Die Drehrichtung der Umlenkwalze 15 ist dabei derart gewählt, dass sich die Oberseite der Umlenkwalze 15 von den Konditionierwalzen 12 und 13 wegbewegt. Die untere Konditionierwalze 12 und die Umlenkwalze 15 besitzen dabei vorzugsweise dieselbe Drehrichtung.

Wie Figur 2 zeigt, besitzt die Umlenkwalze 15 eine von den beiden Konditionierwalzen 12 und 13 abweichende Oberflächengeometrie. In der gezeichneten Ausführung besitzt die Umlenkwalze 15 sich in deren Längsrichtung erstreckende Rippen 18, die zum einen eine bessere Mitnahme des Ernteguts bewirken, zum anderen jedoch auch zur weiteren Konditionierung des Ernteguts beitragen.

Wie die Figuren 2 und 3 zeigen, erstreckt sich oberhalb der zusätzlichen Umlenkwalze 15 ein Abwurfleitblech 19, welches selbstverständlich nicht zwangsweise tatsächlich aus einem Metallblech bestehen muss, sondern auch von einer Schürze, einer Matte oder auch einer Stäbeanordnung gebildet sein kann. Das Abwurfleitblech 19 erstreckt sich vorteilhafterweise geneigt nach hinten/oben, um das von der Umlenkwalze 15 abgeworfene Erntegut schräg nach hinten oben zu lenken. Wie Figur 3 zeigt, kragt das Abwurfleitblech 19 nach hinten ein Stück weit über die Umlenkwalze 15 aus.

## Patentansprüche

1. Erntemaschine mit zumindest einem Mähwerk (4), einem dem Mähwerk nachgeordneten Konditionierer (11), einem dem Konditionierer (11) nachgeordneten Querförderer (8) zum Ablegen des konditionierten Ernteguts in einem seitlichen Schwad, sowie einer Umlenkwalze (15) zur Umlenkung und Förderung des konditionierten Ernteguts auf den Querförderer (8), **dadurch gekennzeichnet, dass** der Konditionierer (11) ein Paar gegenläufig umlaufende, übereinander angeordnete Konditioniererwalzen (12, 13) aufweist, wobei die Umlenkwalze (15)) von ihrer Höhe her zwischen den beiden Konditionierwalzen (12, 13) in deren Abgabebereich angeordnet ist und mit einer Geschwindigkeit antreibbar ist, um das Erntegut auf den Querförderer (8) zu werfen, wobei über der Umlenkwalze (15) ein Auswurfleitblech (19) angeordnet ist.

2. Erntemaschine nach einem der vorhergehenden Ansprüche, wobei der Konditionierer (11) einen gemeinsamen Walzenantrieb (16) für die beiden Konditionierwalzen (12, 13) und die nachgeschaltete Umlenkwalze (15) aufweist.

3. Erntemaschine nach einem der vorhergehenden Ansprüche, wobei die Konditionierwalzen (12, 13) und die Umlenkwalze (15) getrieblich, vorzugsweise über einen Antriebsriemen oder eine Antriebskette (17), miteinander gekoppelt sind.

4. Erntemaschine nach einem der vorhergehenden Ansprüche, wobei die Umlenkwalze (15) eine von den beiden Konditionierwalzen (12, 13) abweichende Oberflächengeometrie besitzt.

5. Erntemaschine nach einem der vorhergehenden Ansprüche, wobei die Umlenkwalze (15) vorspringende Längsrippen (18) aufweist.

6. Erntemaschine nach einem der vorhergehenden Ansprüche, wobei die beiden Konditionierwalzen (12, 13) Quetschwalzen bilden und/oder ineinander greifende Oberflächenkonturen besitzen.

7. Erntemaschine nach einem der vorhergehenden Ansprüche, wobei die beiden Konditionierwalzen (12, 13) schraubenförmig verlaufende Längsrippen (14) aufweisen.

8. Erntemaschine nach einem der vorhergehenden Ansprüche, wobei das Auswurfleitblech (19) über der Umlenkwalze (15) geneigt nach hinten/oben angeordnet ist.

9. Erntemaschine nach einem der vorhergehenden Ansprüche, wobei der Konditionierer (11) mit dem Mähwerk (4) zu einer Baugruppe zusammengefasst ist, die gemeinsam an einem Maschinenrahmen (5) aufgehängt ist.

10. Erntemaschine nach einem der vorhergehenden Ansprüche, wobei mehrere in verschiedenen Fahrspuren angeordnete Mähwerke (4) mit jeweils einem nachgeschalteten Querförderer (8) mit jeweils zumindest einer Auswurfwalze (13) vorgesehen sind.

11. Erntemaschine nach einem der vorhergehenden Ansprüche, wobei das zumindest eine Mähwerk (4) und/oder der zumindest eine Querförderer (8) aus einer abgesenkten Betriebsstellung in eine nach oben geschwenkte Transportstellung bringbar sind.

12. Erntemaschine nach einem der vorhergehenden Ansprüche, wobei das zumindest eine Mähwerk (4) und der zumindest eine Querförderer (8) jeweils um eine liegende, in Fahrtrichtung weisende Schwenkachse schwenkbar an einem gemeinsamen Maschinenrahmen aufgehängt sind.

13. Erntemaschine nach einem der vorhergehenden Ansprüche, wobei sie an einen Schlepper anbaubar ausgebildet ist.

## Claims

1. A harvester comprising at least one cutter bar (4), a conditioner (11) disposed after the cutter bar, a transverse conveyor (8) disposed after the conditioner (11) for depositing the conditioned harvested crop in a lateral windrow, as well as a deflection roll (15) for the deflection and conveying of the conditioned harvested crop onto the transverse conveyor (8), **characterised in that** the conditioner (11) has a pair of conditioning rolls (12, 13) revolving in opposite senses and arranged above one another, with the deflection roll (15) being arranged with respect to its height between the two conditioning rolls (12, 13) in their depositing region and being drivable at a speed to throw the harvested crop onto the transverse convenor (8), with an ejector plate (19) being arranged over the deflection roll (15).

2. A harvester in accordance with one of the preceding claims, wherein the conditioner (11) has a common roll drive (16) for the two conditioner rolls (12, 13) and the downstream deflection roll (15).

3. A harvester in accordance with one of the preceding claims, wherein the conditioner rolls (12, 13) and the deflection roll (15) are coupled to one another transmission-wise, preferably via a drive belt or a drive chain (17).

4. A harvester in accordance with one of the preceding claims, wherein the deflection roll (15) has a surface geometry different from the two conditioner rolls (12, 13).

5. A harvester in accordance with one of the preceding claims, wherein the deflection roll (15) has projecting longitudinal ribs (18).

6. A harvester in accordance with one of the preceding claims, wherein the conditioner rolls (12, 13) form squeeze rolls and/or have surface contours engaging into one another.

7. A harvester in accordance with one of the preceding claims, wherein the two conditioner rolls (12, 13) have longitudinal ribs (14) extending in the manner of screws.

8. A harvester in accordance with one of the preceding claims, wherein the ejector plate (19) is arranged inclined to the rear/top above the deflection roll (15).

9. A harvester in accordance with one of the preceding claims, wherein the conditioner (11) is combined with the cutter bar (4) to form an assembly which is suspended together at a machine frame (5).

10. A harvester in accordance with one of the preceding claims, wherein a plurality of cutter bars (4) are provided arranged in different tracks and having a transverse conveyor (8) disposed behind them with at least one respective ejector roll (13).

11. A harvester in accordance with one of the preceding claims, wherein the at least one cutter bar (4) and/or the at least one transverse conveyor (8) can be moved from a lowered operating position into an upwardly pivoted transport position.

12. A harvester in accordance with one of the preceding claims, wherein the at least one cutter bar (4) and the at least one transverse conveyor (8) are each suspended pivotably at a common machine frame around a horizontal pivot axis facing in the direction of travel.

13. A harvester in accordance with one of the preceding claims, wherein it is designed to be able to be installed at a tractor.

## Revendications

1. Machine de récolte comprenant au moins une faucheuse (4), un conditionneur (11) placé en aval de la faucheuse, un convoyeur transversal (8) placé en aval du conditionneur (11) pour la dépose de la marchandise récoltée et conditionnée dans un andain latéral, et un cylindre inverseur (15) pour la déviation et le transport de la marchandise récoltée et conditionnée sur le convoyeur transversal (8), **caractérisé en ce que** le conditionneur (11) présente une paire de cylindres de conditionnement (12, 13) tournant dans le sens contraire et disposés l'un au-dessus de l'autre, le cylindre inverseur (15) étant disposé à partir de sa hauteur entre les deux cylindres de conditionnement (12, 13) dans leur zone de distribution et pouvant être entraîné avec une vitesse, afin de jeter la marchandise récoltée sur le convoyeur transversal (8), une tôle chicane d'éjection (19) étant disposée au-dessus du cylindre inverseur (15).

2. Machine de récolte selon l'une quelconque des revendications précédentes, le conditionneur (11) présentant une commande de cylindre (16) commune pour les deux cylindres de conditionnement (12, 13) et le cylindre inverseur (15) monté en aval.

3. Machine de récolte selon l'une quelconque des revendications précédentes, les cylindres de conditionnement (12, 13) ou le cylindre inverseur (15) étant couplés les uns avec les autres au niveau de la transmission, de préférence au moyen d'une courroie d'entraînement ou d'une chaîne d'entraînement (17).

4. Machine de récolte selon l'une quelconque des revendications précédentes, le cylindre inverseur (15) présentant une géométrie de surfaces différente des deux cylindres de conditionnement (12, 13).

5. Machine de récolte selon l'une quelconque des revendications précédentes, le cylindre inverseur (15) présentant des nervures longitudinales (18) saillantes.

6. Machine de récolte selon l'une quelconque des revendications précédentes, les deux cylindres de conditionnement (12, 13) formant des cylindres d'écrasement et/ou présentant des contours de surface s'engrenant les uns dans les autres.

7. Machine de récolte selon l'une quelconque des revendications précédentes, les deux cylindres de conditionnement (12, 13) présentant des nervures longitudinales (14) agencées avec une forme hélicoïdale.

8. Machine de récolte selon l'une quelconque des revendications précédentes, la tôle chicane d'éjection (19) étant disposée au-dessus du cylindre inverseur (15) de façon inclinée vers l'arrière/le haut.

9. Machine de récolte selon l'une quelconque des revendications précédentes, le conditionneur (11) étant regroupé avec une faucheuse (4) pour former un ensemble qui est suspendu conjointement sur un cadre de machine (5).

10. Machine de récolte selon l'une quelconque des revendications précédentes, plusieurs faucheuses (4) disposées dans différentes traces de roulement étant prévues avec respectivement un convoyeur transversal (8) monté en aval avec respectivement au moins un cylindre d'éjection (13).

11. Machine de récolte selon l'une quelconque des revendications précédentes, la au moins une faucheuse (4) et/ou le au moins un convoyeur transversal (8) pouvant être amené(s) à partir d'une position de service abaissée dans une position de transport basculée vers le haut.

12. Machine de récolte selon l'une quelconque des revendications précédentes, la au moins une faucheuse (4) et le au moins un convoyeur transversal (8) étant suspendus sur un cadre de machine commun de façon à pouvoir basculer respectivement autour d'un axe de pivotement allongé et dirigé dans le sens de marche.

13. Machine de récolte selon l'une quelconque des revendications précédentes, celle-ci étant réalisée de façon à pouvoir être rapportée sur un tracteur.
